(19) Europäisches Patentamt
European Patent Office
Office européen des brevets

(11) **EP 2 398 345 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(21) Anmeldenummer: **10707451.0**

(22) Anmeldetag: **18.02.2010**

(51) Int Cl.:
*G01K 17/06* *(2006.01)*     *A23L 3/00* *(2006.01)*

(86) Internationale Anmeldenummer:
**PCT/EP2010/001031**

(87) Internationale Veröffentlichungsnummer:
**WO 2010/094487 (26.08.2010 Gazette 2010/34)**

(54) **VERFAHREN UND VORRICHTUNG ZUR ÜBERWACHUNG EINER PASTEURISIERUNGSANLAGE**

METHOD AND DEVICE FOR MONITORING A PASTEURIZATION INSTALLATION

PROCÉDÉ ET DISPOSITIF DE SURVEILLANCE D'UNE INSTALLATION DE PASTEURISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.02.2009 DE 102009009832**

(43) Veröffentlichungstag der Anmeldung:
**28.12.2011 Patentblatt 2011/52**

(73) Patentinhaber: **KRONES Aktiengesellschaft**
**93073 Neutraubling (DE)**

(72) Erfinder: **WAGNER, Falko, Jens**
**DK-4070 Kirke Hyllinge (DK)**

(74) Vertreter: **Grünecker, Kinkeldey,**
**Stockmair & Schwanhäusser**
**Leopoldstrasse 4**
**80802 München (DE)**

(56) Entgegenhaltungen:
**EP-A1- 0 960 574     EP-A1- 1 106 083**
**WO-A1-2004/066756     DE-A1- 4 010 921**
**DE-A1-102005 028 195     DE-A1-102005 042 783**
**US-A- 4 841 457     US-A1- 2002 170 440**

- DILAY E ET AL: "Modeling, simulation and optimization of a beer pasteurization tunnel" JOURNAL OF FOOD ENGINEERING, BARKING, ESSEX, GB LNKD- DOI:10.1016/J.JFOODENG.2005.07.001, Bd. 77, Nr. 3, 1. Dezember 2006 (2006-12-01), Seiten 500-513, XP025028695 ISSN: 0260-8774 [gefunden am 2006-12-01]

**Beschreibung**

Die Erfindung bezieht sich auf ein Verfahren und eine Vorrichtung zur Überwachung der Funktion einer Pasteurisierungsanlage.

Bisher wurden der Verbrauch von Energie und Wasser in Pasteurisierungsanlagen, wie beispielsweise einer Tunnelpasteurisierungsanlage, nur gemessen und aufgezeichnet, es wurde jedoch dem Betreiber überlassen, diese Informationen zu verwenden, um die Leistungsfähigkeit der Pasteurisierungsanlage zu analysieren und zu bewerten. Dies fand selten mehr als ein oder zwei mal im Jahr statt. Darüber hinaus war es dem Betreiber überlassen, festzustellen, welche Werte noch akzeptabel sind oder welche Werte möglicherweise auf eine Fehlfunktion der Pasteurisierungsanlage hindeuten. Ressourcenverluste, wie beispielsweise Verlust an Energie und Wasser, waren demzufolge vorprogrammiert.

Die EP 1106083 A1 offenbart ein Verfahren und eine Vorrichtung zur Erfassung und Regelung der von einem Produkt aufgenommenen Pasteurisierungseinheiten.

Der Artikel von E. Dilay et. al.: "Modeling, simulation and optimization of a beer pasteuerization tunnel" in Journal of Food Engineering, Barking, Essex, GB, Bd. 77, Nr. 3, 1. Dez. 2006, S. 500 - 513, ISSN 0260-8774, offenbart ein Verfahren zur Auslegung eines Tunnelpasteurs.

Die DE 10 2005 028 195 A1 offenbart einen Tunnelpasteur.

Der Erfindung liegt die Aufgabe zugrunde, ein Verfahren zur Überwachung der Funktion einer Pasteurisierungsanlage und eine mit einer entsprechenden Vorrichtung zum Überwachen der Funktion ausgerüstete Pasteurisierungsanlage bereitzustellen, mit der schnell und einfach die Funktion der Pasteurisierungsanlage überwacht und Fehlfunktionen frühzeitig festgestellt werden können.

Die Erfindung stellt zur Lösung dieser Aufgabe ein Verfahren mit den Merkmalen des Anspruchs 1 und eine Pasteurisierungsanlage mit den Merkmalen des Anspruchs 5 bereit.

Vorteilhafte Weiterbildungen der Erfindung sind den Unteransprüchen zu entnehmen.

Die erfindungsgemäße Vorrichtung bildet ein frühes Warnsystem für eine mögliche Fehlfunktion von Komponenten, mit dem der Energie - und/oder Wasserverbrauch festgestellt und mit einem theoretischen Erwartungswert verglichen wird. Durch die Erfindung ist es möglich, ein mathematisches Modell einzusetzen, das eine Fehlfunktion der Anlage feststellt, lange bevor der Betreiber ausreichend Erfahrung mit dem "normalen" Verbrauch Energie und Wasser gesammelt hat, um einschätzen zu können, wann ein erhöhter Verbrauch auf einem Fehler in der Anlage beruht. Durch die erfindungsgemäße Ausgestaltung kann das mathematische Modell für die gesamte Pasteurisierungsanlage erstellt werden, so dass alle (wichtigen) Funktionen, die bei Versagen zu einem erhöhten Energie - und/oder Wasserverbrauch führen, überwacht werden können. Auf diese Weise ist der Betreiber in die Lage versetzt, frühzeitig korrigierend einzugreifen.

Mit der vorliegenden Erfindung ist es möglich, selbsttätig den gegenwärtigen Verbrauch zu analysieren und zu bewerten, und eine Alarmmeldung auszugeben, sobald eine Abweichung zwischen dem Istwert und dem theoretischen Erwartungswert des Verbrauchs festzustellen ist, was gewöhnlich innerhalb von ein bis zwei Stunden möglich ist. Dadurch wird der Betreiber in die Lage versetzt, einen möglichen Fehler einer Komponente sofort zu korrigieren, was den Verlust von Ressourcen, wie Energie und Wasser, über Monate hinweg vermeidet.

Angewandt auf eine Behandlungszonen aufweisende Tunnelpasteurisierungsanlage, in der die Produkte, wie beispielsweise Gefäße oder, was nachfolgend vorausgesetzt wird, Flaschen, in Reihen durchlaufen, wird basierend auf einem mathematischen Modell für die Produkttemperatur, die gegenwärtige Produkttemperatur für jede Flaschenreihe in der Tunnelpasteurisierungsanlage im Sekundenabstand berechnet. Dies wiederum wird verwendet, um den theoretischen Energieverbrauch zu berechnen.

Der theoretische Energieverbrauch für jede Flaschenreihe wird für alle Flaschenreihen in jeder Zone der Tunnelpasteurisierungsanlage aufsummiert. Dies ergibt den theoretischen Energieverbrauch, positiv oder negativ, für jede Zone. Der theoretische Energieverbrauch für jede Zone kann entweder negativ oder positiv sein. Wenn er negativ ist, wird er in einen theoretischen Wasserverbrauch zum Kühlen umgewandelt. Wenn er positiv ist, wird er in einen theoretischen Energieverbrauch zum Erwärmen umgewandelt.

Der sich ergebende theoretische Wasser- und Energieverbrauch für jede Zone wird dann jeweils verglichen mit dem gemessenen Verbrauch an Wasser und Energie in dieser bestimmten Zone. Wenn der tatsächliche Verbrauch entweder von Wasser oder von Energie höher ist als der theoretische Verbrauch, wird eine Alarmmeldung angezeigt oder erzeugt.

Dies gestattet dem Betreiber, potentielle Fehlfunktionen von Komponenten oder von Materialversagen sehr viel eher zu entdecken, als dies während des normalen Verfahrens möglich ist. Gewöhnlich wird der Wasser- und Energiehaushalt einer Pasteurisierungsanlage einmal jede zwei bis drei Monate überwacht und analysiert. Dies führt zu einem Energie- oder Wasserverbrauch, welcher für einen langen Zeitraum zu hoch ist, bevor das Problem entdeckt und seine Wurzel gefunden und beseitigt werden kann.

Durch die vorliegende Erfindung erhält die Pasteurisierungsanlage eine Vorrichtung, mit der übermäßiger Energie- und Wasserverbrauch innerhalb eines Tages entdeckt und die geeigneten Gegenmaßnahmen eingeleitet werden können, um einen ausgedehnten Energie- und Wasserverlust zu vermeiden.

Nachfolgend werden die Messungen des Energie- und Wasserverbrauchs im Einzelnen beschrieben, gefolgt durch die Berechnung des theoretischen Erwartungswertes des Verbrauchs.

Messungen des Istwertes des Energieverbrauchs

Der tatsächliche Energieverbrauch wird durch geeignete Messeinrichtungen gemessen über den Durchfluss durch und die Temperaturdifferenz über einem zentralen Wärmetauscherzufuhrsystem (CHESS). Der gesamte Energieverbrauch wird berechnet durch:

$$Q_H = m \; C_p \; dT \; \eta \qquad (1)$$

wobei m der Massenfluss durch das Wärmetauschersystem, $C_p$ die Wärmekapazität von Wasser, dT die Temperaturdifferenz über das Wärmetauschersystem und $\eta$ die Arbeitsleistung des Wärmetauschers im Wärmetauschersystem ist.

Wenn die tatsächliche Gesamtenergie vorgegeben ist, muss diese auf die einzelnen Zonen verteilt werden. Der Gesamtfluss ist die Summe des Flusses zu den einzelnen Zonen, vorgegeben durch:

$$F_{Total} = \Sigma( f_i \; v_i \; \varphi_i ) = m \qquad (2)$$

wobei F der Gesamtfluss, $f_i$ der maximale Fluss durch das Kühlventil der untersuchten Zone i, $v_i$ die Öffnung des Kühlventils der Zone i (zwischen 0 und 1) und $\varphi$ der Konstruktionsfaktor für das bestimmte Ventil in Zone i ist, abhängig von der Situation im Wassersystem.

Der Fluss durch die einzelne Zone wird dann gefunden durch:

$$f_i = F_{Total} (v_i \; \varphi_i) \; / \; \Sigma(v_i \; \varphi_i) \qquad (3)$$

Die Gesamtenergie wird dann verteilt auf die einzelnen Zonen durch:

$$q_i = Q_H \; f_i \; / \; F_{Total} \qquad (4)$$

Messung des tatsächlichen Wasserverbrauchs

Der Istwert des tatsächlichen Wasserverbrauchs wird gemessen durch den Durchflussmesser in der Frischwasserleitung. Dieser gesamte Fluss wird verteilt auf die einzelnen Zonen durch:

$$f_i = F_{Total} (v_i \; \varphi_i) \; / \; \Sigma(v_i \; \varphi_i) \qquad (5)$$

Berechnung des theoretischen Erwartungswertes des Energieverbrauchs

Der theoretische Erwartungswert des Energieverbrauchs besteht aus drei Teilen: Der Energieaufnahme der Produkte, der Energieverlust an die Umgebung und der Energieverlust zwischen den Zonen.

Energieaufnahme durch die Produkte

Für jeden Verfahrensschritt wird die Energieaufnahme in einem Produkt durch die Energiedifferenz zwischen der durch Temperaturmesseinrichtungen gemessenen Temperatur vorher und nachher ($T_{content}$ und $T_{conten\text{-}OLD}$) berechnet. Da die Zykluszeit für jeden Verfahrensschritt 1 Sekunde beträgt, kann der Energiefluss in ein Produkt leicht berechnet werden durch:

$$Q_P = m_P C_P (T_{content} - T_{content\_OLD}) \tag{6}$$

was wiederum multipliziert werden muss durch die Anzahl der Produkte, die Seite an Seite in der Anlage stehen:

$$n = \frac{D_P\, b\, n_{decks}\, \theta}{\dfrac{D_P^{\,2}}{4}\pi} \tag{7}$$

wobei Dp der Durchmesser der Produkte, b die Behandlungsbreite des Pasteuriseurs, $n_{decks}$ die Anzahl der Decks und $\theta$ die Fülldichte bzw. der Füllfaktor ist.

Dies muss zusammengestellt werden für alle Produkte in jeder Zone:

$$Q_{P,Zone} = \sum_{Rows\ in\ zone} Q_P n \tag{8}$$

und für den Gesamtenergieverbrauch als Summe aller Produktreihen:

$$Q_{P,TOT} = \sum_{MaxAUZ} Q_P n \tag{9}$$

Eine wichtige Information, die erforderlich ist, damit die Berechnung stimmt, ist der Füllfaktor bzw. die Fülldichte. Demzufolge muss eine Messung der Anzahl der Produkt, die in die Pasteurisierungsanlage eintreten, durchgeführt werden. Dies kann entweder durchgeführt werden durch einen Produktzähler am Eingang der Pasteurisierungsanlage oder bei Verwendung der Geschwindigkeit des Befüllers vor der Pasteurisierungsanlage als zeitversetztes Signal für die Pasteurisierungsanlage selbst.

Energieverlust an die Umgebung

Für jede Zone wird der Energieverlust in die Umgebung berechnet durch:

$$Q_L = kA_Z (T_Z - T_{env}) \tag{10}$$

wobei k der Wärmeübertragungskoeffzient an die Umgebung, $T_Z$ die Temperatur in der Zone, $T_{env}$ die Temperatur der Umgebung und $A_Z$ die Oberfläche der Zone bedeutet.
Der Wert muss aufsummiert werden für alle Zonen, um den Gesamtenergieverlust des Pasteuriseurs zu erhalten, durch:

$$Q_{L,TOT} = \sum_{AZ} Q_L$$

$$(11)$$

Die wichtigste Information hier ist die Existenz einer Umgebungstemperaturmessung, die mittels einer Temperaturmesseinrichtung vorgenommen werden muss.

Energieverlust an benachbarte Zonen

Der Energieverlust an benachbarte Zonen wird berechnet durch den Wärmeübertragungskoeffizienten zwischen den Zonen und der durch eine Temperaturmesseinrichtung festgestellte Temperaturdifferenz der bestimmten Zone bezüglich der vorangegangenen Zone und bezüglich der folgenden Zone, durch:

$$Q_N = k_N A_N (T_{Z-1} - T_Z) + k_N A_N (T_Z - T_{Z+1})$$

$$(12)$$

wobei $k_N$ der Wärmeübertragungskoeffizient zwischen den Zonen, $T_Z$ die Zonentemperatur, und AN die Fläche des Wärmeübergangs zwischen den Zonen (Querschnittsfläche) ist.

Dies muss aufsummiert werden für alle Zonen, um den gesamten Energieverlust der Pasteurisierungsanlage zu erhalten durch:

$$Q_{N,TOT} = \sum_{AZ} Q_N$$

$$(13)$$

Gesamtenergieverbrauch der Zonen

Der Gesamtenergieverbrauch jeder Zone ist die Summe des gesamten Energieverbrauchs, wie oben berechnet:

$$Q_{Z,TOT} = Q_P + Q_L + Q_N$$

$$(14)$$

Berechnung des theoretischen Erwartungswertes des Wasserverbrauches

Wenn der gesamte Energieverbrauch einer Zone negativ ist, wird diese "Kühl"-Energie in Frischwasserverbrauch umgerechnet. Dieser Verbrauch wird angenähert durch die Temperaturdifferenz zwischen der Zone, die gekühlt werden muss, und der Temperatur des Frischwassers mal der Wärmekapazität des Wassers, um den Anteil von Wasser zu erreichen, der notwendig ist, um den durch den negativen Energieverbrauch erforderlichen Wert der Kühlung zuzuführen:

$$m_{freshwater} = Q_{Z,TOT} / (C_p \, dT)$$

$$(15)$$

Vergleich des theoretischen Erwartungswertes und des tatsächlichen Istwertes des Energieverbrauchs

Um den gegenwärtigen Betriebszustand des Pasteuriseurs zu analysieren, wird der tatsächliche Energieverbrauch jeder Zone mit dem theoretischen Erwartungswert des Energieverbrauchs dieser Zone verglichen. Wenn die Differenz größer ist als eine vorbestimmte Prozentzahl für eine vorbestimmte Zeitdauer, wird ein Alarm ausgegeben.

Wenn diese Analyse auf Zonenniveau durchgeführt wird, hat der Betreiber einen Hinweis auf den Ort des Problems.

Beispiele einer Fehlerbehebung

Wenn eine bestimmte Zone zu viel Energie verbraucht, verglichen mit dem theoretischen Erwartungswert, könnte dies eines der folgenden Probleme anzeigen:

- Das Kühlventil in der gleichen Zone (wenn es eine Pasteurisierungszone ist) oder in der korrespondierenden regenerativen Zone (wenn es eine regenerative Zone ist) könnte leck sein. Der zusätzlichen Einführung von kaltem Wasser, was nicht durch das System festgestellt wird, wird entgegengewirkt durch einen erhöhten Energieverbrauch dieser Zone:

- Eine Vermischung von Wasser zwischen der Zone und ihrer Nachbarzone (kälter) könnte bestehen. Der zusätzlichen Zuführung von kaltem Wasser, was nicht durch das System entdeckt wird, wird entgegengewirkt durch einen erhöhten Energieverbrauch dieser Zone.

Wenn eine bestimmte Zone zu viel Wasser zum Kühlen verwendet, verglichen mit dem theoretischen Erwartungswert, könnte dies auf eines der folgenden Probleme hinweisen:

- Das Heizventil in der gleichen Zone (wenn das eine Pasteurisierungszone ist) oder in der korrespondierenden regenerativen Zone (wenn das eine regenerative Zone ist) könnte leck sein. Der zusätzlichen Zuführung von heißem Wasser, was nicht durch das System entdeckt wird, wird entgegengewirkt durch einen erhöhten Wasserverbrauch zum Kühlen dieser Zone.

- Eine Vermischung von Wasser zwischen der Zone und ihrer Nachbarzone (heißer) könnte stattfinden. Dem zusätzlichen Einführen von heißem Wasser, was nicht durch das System entdeckt wird, wird entgegengewirkt durch einen erhöhten Wasserverbrauch zum Kühlen dieser Zone.

Im Maßstab der Gesamtanlage kann der Istwert des Gesamtenergieverbrauchs auch verwendet werden, um ein Problem zu finden, wenn man diesen Wert mit dem theoretischen Erwartungswert des Energieverbrauchs vergleicht.

Wenn der tatsächliche Energieverbrauch des gesamten Pasteuriseurs höher ist als der theoretische Erwartungswert des Gesamtenergieverbrauchs könnte dies auf eines der folgenden Probleme hinweisen:

- Der Wärmetauscher ist verstopft und kann nicht für den gewünschten Durchfluss durch das System sorgen.

- Ein strukturelles Problem im Puffersystem des Pasteuriseurs ist aufgetreten, und ein Vermischen von Wasser im Puffersystem findet statt.

Anwendungsbeispiele

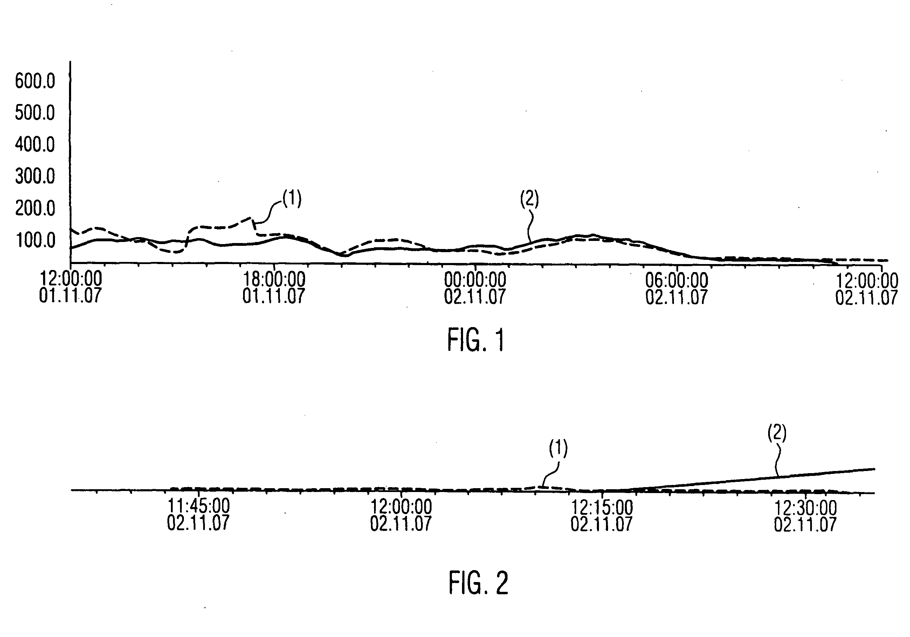

Fig. 1 zeigt den aufgezeichneten Gesamtenergieverbrauch verglichen mit dem Erwartungswert des Verbrauchs. Während des normalen Betriebs zeigt das Ergebnis eine gute Übereinstimmung zwischen dem gestrichelt gezeichneten theoretischen Erwartungswert (1) des Energieverbrauchs, berechnet durch das Verfahren der vorliegenden Erfindung, und dem mit durchgezogener Linie dargestellten gemessenen Istwert (2) des Energieverbrauchs.

Fig. 2 zeigt ein Beispiel, wie eine fehlende Übereinstimmung zwischen dem theoretischen (1) und dem tatsächlichen (2) Verbrauch verwendet werden kann, um einen Alarm darzustellen, was dem Betreiber anzeigt, wo er nach möglichen Komponentenfehlern im System suchen muss. In Fig. 2 werden die Verhältnisse für eine Zone dargestellt, wobei auffällt, dass im rechten Bereich der Grafik der gemessene Energieverbrauch gegenüber dem theoretischen Erwartungswert ansteigt.

Anstelle oder zusätzlich der grafischen Darstellung über die Kurven nach Fig. 2, kann auch eine Balkendarstellung eingesetzt werden, in der die Abweichungen beispielsweise als Balken dargestellt und ein Überschreiten der Erwartungswerte in Rot eingezeichnet sind.

Schlussfolgerung

Durch Berechnen und Vergleichen des theoretischen Energie- und Wasserverbrauchs der einzelnen Zonen und der gesamten Pasteurisierungsanlage, wird ein frühes Warnmodell für ein mögliches Versagen von Komponenten eingerichtet. Dies kann den Energie- und Wasserverlust der Tunnelpasteurisierungsanlage drastisch reduzieren, da der Betreiber eine unmittelbare Warnung erhält, dass irgend etwas nicht in Ordnung ist.

Statt mehrere Monate zu warten, bevor der Energie- und Wasserhaushalt analysiert und mit früheren Zeiträumen verglichen wird, kann das Problem nun realisiert und lokalisiert werden am gleichen Tag, an dem es auftritt, wodurch der Verlust an Energie und Wasser minimiert wird.

**Patentansprüche**

1. Verfahren zur Überwachung der Funktion einer Pasteurisierungsanlage für Produkte, wie beispielsweise Gefäße oder Flaschen, wobei ein theoretischer Erwartungswert des Energie- und/oder Wasserverbrauchs berechnet, der Istwert des Energie- und/oder Wasserverbrauchs bestimmt und aus einer Abweichung zwischen dem Erwartungswert und dem Istwert auf eine Fehlfunktion der Pasteurisierungsanlage geschlossen wird,
   wobei der theoretische Erwartungswert des Energieverbrauchs über die Energieaufnahme jedes Produktes und den Energieverbrauch an die Umgebung und/oder über den Energieverlust zwischen Zonen der Produktbehandlung berechnet wird,
   wobei der Istwert des Energieverbrauchs über die Durchflussströmung durch und die Temperaturdifferenz über das Hauptwärmetauschersystem bestimmt wird,
   und/oder
   wobei wenn der Gesamtenergieverbrauch einer zu kühlenden Zone negativ ist, der theoretische Erwartungswert des Wasserverbrauchs durch die Temperaturdifferenz zwischen der zu kühlenden Zone und der Temperatur des Frischwassers mal der Wärmekapazität des Wassers berechnet wird, und
   wobei der Istwert des Wasserverbrauchs durch eine Durchflussmessung in einer Frischwasserzufuhr bestimmt wird.

2. Verfahren nach Anspruch 1, **dadurch gekennzeichnet, dass** die Produktbehandlung in mehrere Zonen aufgeteilt wird und Istwert und Erwartungswert zonenbezogen behandelt werden.

3. Verfahren nach Anspruch 1 oder 2, **dadurch gekennzeichnet, dass** der theoretische Erwartungswert des Energieverbrauchs über die Produkttemperatur berechnet wird, wobei die Produkttemperatur durch die Kombination der Temperatur mindestens einer Zone und eines vorzugebenden Wärmeübertragungsparameters ermittelt wird.

4. Verfahren nach einem der Ansprüche 1 bis 3, **dadurch gekennzeichnet, dass** der theoretische Erwartungswert des Wasserverbrauchs über die Temperaturdifferenz der zu kühlenden Produkte und der Frischwassertemperatur berechnet wird.

5. Pasteurisierungsanlage für Produkte, wie beispielsweise Gefäße oder Flaschen, **gekennzeichnet durch** eine Vorrichtung zur Überwachung der Funktion zur Durchführung des Verfahrens nach einem der Ansprüche 1 bis 4 , wobei die Vorrichtung eine Messvorrichtung zum Feststellen der Durchflussmenge **durch** und der Temperaturdifferenz über ein Hauptwärmetauschersystem aufweist.

6. Pasteurisierungsanlage nach Anspruch 5, **dadurch gekennzeichnet, dass** die Vorrichtung eine Temperaturmesseinrichtung zum Feststellen der Temperatur des Produktes aufweist.

7. Pasteurisierungsanlage nach Anspruch 5 oder 6, **dadurch gekennzeichnet, dass** die Vorrichtung eine Temperaturmesseinrichtung für die Umgebung der Pasteurisierungsanlage aufweist.

8. Pasteurisierungsanlage nach einem der Ansprüche 5 bis 7, **dadurch gekennzeichnet, dass** die Vorrichtung eine Temperaturmesseinrichtung für Frischwasser aufweist.

**Claims**

1. Method of monitoring the function of a pasteurization installation for products, such as for example containers or bottles, wherein a theoretical expected value of the energy and/or water consumption is calculated, the actual value of the energy and/or water consumption is determined, and from a deviation between the expected value and the actual value, a malfunction of the pasteurization installation is concluded,

wherein the theoretical expected energy consumption is calculated via the energy take-up of each product and the energy consumption to the environment and/or the energy loss between zones of the pasteurization treatment,

wherein the actual value of the energy consumption is determined via the volume flow rate through and the temperature difference across the main heat exchanger system,

and/or

wherein if the total energy consumption of a zone to be cooled is negative, the theoretical expected value of the water consumption is calculated via the temperature difference between the zone to be cooled and the fresh water temperature multiplied with the heat capacity of the water, and

wherein the actual value of the water consumption is determined by measuring the volume flow rate in a fresh water supply.

2. Method according to claim 1, **characterized in that** the product treatment is divided into several zones and the actual value and the expected value are treated relating to the zones.

3. Method according to claim 1 or 2, **characterized in that** the theoretical expected value of energy consumption is calculated via the product temperature, wherein the product temperature is detected by the combination of the temperature of at least one zone and a heat transfer parameter to be predetermined.

4. Method according to one of claims 1 to 3, **characterized in that** the theoretical expected value of water consumption is calculated via the temperature difference of the products to be cooled and the fresh water temperature.

5. Pasteurization installation for products, such as for example containers or bottles, **characterized by** a device for monitoring the function for carrying out the method according to one of claims 1 to 4, wherein the device comprises a measuring device for determining the volume flow rate through and the temperature difference across the main heat exchanger system.

6. Pasteurization installation according to claim 5, **characterized in that** the device comprises a temperature measuring means for determining the temperature of the product.

7. Pasteurization installation according to claim 5 or 6, **characterized in that** the device comprises a temperature measuring means for the environment of the pasteurization installation.

8. Pasteurization installation according to one of claims 5 to 7, **characterized in that** the device comprises a temperature measuring means for fresh water.

**Revendications**

1. Procédé de surveillance du fonctionnement d'une installation de pasteurisation pour des produits, comme par exemple des récipients ou des bouteilles, d'après lequel on calcule une valeur attendue théorique de la consommation d'énergie et/ou d'eau, on détermine la valeur réelle de la consommation d'énergie et/ou d'eau, et, à partir d'un écart entre la valeur attendue et la valeur réelle, on conclut à un fonctionnement défectueux de l'installation de pasteurisation, procédé

d'après lequel on calcule la valeur attendue théorique de la consommation d'énergie par l'intermédiaire de l'absorption d'énergie de chaque produit et de la consommation d'énergie partant à l'environnement, et/ou par l'intermédiaire de la perte d'énergie entre des zones du traitement des produits,

d'après lequel on détermine la valeur réelle de la consommation d'énergie par l'intermédiaire du débit d'écoulement de passage à travers le système d'échange de chaleur principal et de la différence de température au passage de celui-ci,

et/ou

d'après lequel, lorsque la consommation totale d'énergie d'une zone à refroidir est négative, on calcule la valeur attendue théorique de la consommation d'eau par la différence de température entre la zone à refroidir et la température de l'eau fraiche, multipliée par la capacité calorifique de l'eau, et

d'après lequel on détermine la valeur réelle de la consommation d'eau par une mesure de débit dans une amenée d'eau fraiche.

**2.** Procédé selon la revendication 1, **caractérisé en ce que** l'on répartit le traitement des produits sur plusieurs zones, et on traite la valeur réelle et la valeur attendue, par zone.

**3.** Procédé selon la revendication 1 ou la revendication 2, **caractérisé en ce que** l'on calcule la valeur attendue théorique de la consommation d'énergie par l'intermédiaire de la température du produit, la température du produit étant déterminée par la combinaison de la température d'au moins une zone et d'un paramètre de transfert de chaleur à prescrire.

**4.** Procédé selon l'une des revendications 1 à 3, **caractérisé en ce que** l'on calcule la valeur attendue théorique de la consommation d'eau par l'intermédiaire de la différence de température des produits à refroidir et de la température de l'eau fraiche.

**5.** Installation de pasteurisation pour des produits, comme par exemple des récipients ou des bouteilles, **caractérisée par** un dispositif de surveillance de fonctionnement pour la mise en oeuvre du procédé selon l'une des revendications 1 à 4, installation dans laquelle le dispositif comprend un appareillage de mesure pour déterminer le débit de passage à travers un système d'échange de chaleur principal, et la différence de température au passage de celui-ci.

**6.** Installation de pasteurisation selon la revendication 5, **caractérisée en ce que** le dispositif comprend un appareillage de mesure de température pour déterminer la température du produit.

**7.** Installation de pasteurisation selon la revendication 5 ou la revendication 6, **caractérisée en ce que** le dispositif comprend un appareillage de mesure de température pour l'environnement de l'installation de pasteurisation.

**8.** Installation de pasteurisation selon l'une des revendications 5 à 7, **caractérisée en ce que** le dispositif comprend un appareillage de mesure de la température d'eau fraiche.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1106083 A1

- DE 102005028195 A1

**In der Beschreibung aufgeführte Nicht-Patentliteratur**

- **E. DILAY.** Modeling, simulation and optimization of a beer pasteuerization tunnel. *Journal of Food Engineering, Barking, Essex, GB,* 01. Dezember 2006, vol. 77 (3), ISSN 0260-8774, 500-513